Europäisches Patentamt

European Patent Office

Office européen des brevets

(19)

(11) Veröffentlichungsnummer: **0 310 955**
**A2**

# (12) EUROPÄISCHE PATENTANMELDUNG

(21) Anmeldenummer: 88116174.9

(51) Int. Cl.⁴: **C08L 97/02 , B27N 1/00**

(22) Anmeldetag: 30.09.88

(30) Priorität: 05.10.87 DE 3733630

(43) Veröffentlichungstag der Anmeldung:
12.04.89 Patentblatt 89/15

(84) Benannte Vertragsstaaten:
AT BE CH DE ES FR GB GR IT LI NL SE

(71) Anmelder: **BASF Aktiengesellschaft**
**Carl-Bosch-Strasse 38**
**D-6700 Ludwigshafen(DE)**

(72) Erfinder: **Schmidt-Hellerau, Christof**
**Rheinrugenstrasse 45**
**D-6700 Ludwigshafen(DE)**
Erfinder: **Mayer, Johann, Dr.**
**Am Mandelgarten 5**
**D-6713 Freinsheim(DE)**

(54) **Verfahren zur Herstellung von Holzwerkstoffen.**

(57) Holzwerkstoffe mit verminderter nachträglicher Formaldehydabspaltung können durch Mischen von lignocellulosehaltigen Teilchen, z.B. Holzspänen, mit einem härtbaren Bindemittel auf der Grundlage härtbarer Aminoplastkondensate und anschließendem Verpressen der Mischung unter Wärmeeinwirkung, wobei vor dem Mischen der Teilchen mit dem härtbaren Bindemittel eine Mischung A enthaltend ein wasserverträgliches Mittel zur Bindung von Formaldehyd auf die Teilchen aufgetragen bzw. mit ihnen vermischt wird, mit guter Harzreaktivität und mit guten Festigkeiten und Quellwerten vorteilhaft hergestellt werden, wenn die Mischung A eine wäßrige lösung mit einem pH-Wert von 3,0 bis 6,5 darstellt, die

    a) organische Säuren, die Holz nicht oder nur unwesentlich angreifen, in einer Menge von über 15 Gew.%, bezogen auf den Feststoffgehalt der Lösung, bevorzugt Gemische aliphatischer Carbonsäuren mit 4 bis 10 C-Atomen, und

    b) eine formaldehydbindende, stickstoffhaltige Verbindung, insbesondere Harnstoff, enthält.

## Verfahren zur Herstellung von Holzwerkstoffen

Die Erfindung betrifft ein Verfahren zur Herstellung von Holzwerkstoffen mit verminderter Formaldehydabspaltung, bei dem ein Gemisch bestimmter Härter und einer formaldehydbindenden, stickstoffhaltigen Verbindung, insbesondere Harnstoff, vor dem Mischen der lignocellulosehaltigen Teilchen mit dem Aminoplast-Bindemittel, dem Beleimen, auf die Teilchen aufgebracht oder mit diesen vermischt wird.

Die Herstellung von Spanplatten unter Verwendung von Spänen und härtbaren Amino- und/oder Phenoplasten ist seit langem bekannt. Zum Binden des freiwerdenden Formaldehyds aus Aminoplastharzen bei der Fabrikation von Spanplatten ist der Einsatz von Harnstoff, Melamin, Benzoguanamin, Dicyandiamid, Resorcin, Ammoniak usw. sowie von Stärke, Kasein, Blutalbumin und ähnlichen Naturstoffen bekannt. Eine der einfachsten Methoden wird in der DE-PS 1 055 806 beschrieben. Es wird eine Harnstoff-Lösung auf die feuchten Holzspäne versprüht, anschließend erfolgt das Trocknen und Auftragen der Leime, das sogenannte Beleimen der Späne. Diese Methode hat jedoch einen entscheidenden Nachteil. Der Formaldehyd wird zwar gut gebunden, die Festigkeiten und Quellwerte der Spanplatten verschlechtern sich jedoch wesentlich. Auch bei einem "kaschierten" Einsatz von Harnstoff in einer Polymerisat-Dispersion oder einer Paraffin-Emulsion, die getrennt, d.h. vor dem Leim, auf die Späne aufgebracht wird (DE-PS 27 40 207), tritt entweder eine Verlängerung der erforderlichen Preßzeit oder eine Verschlechterung der technologischen Werte der resultierenden Platte ein. Außerdem werden die Kosten pro $m^3$ Spanplatte meist so hoch, daß sich auch aus diesem Grund diese Verfahren nicht durchgesetzt haben.

In der EP-B 150 420 wird die Herstellung einer Härterlösung für Aminoplast-Leimharze beschrieben, die gleichzeitig eine formaldehydbindende Wirkung aufweist. Diese Härterlösung aus Diammoniumsalzen hat sich bei phenolmodifizierten Melamin-Harnstoff-Formaldehyd-Harzen im Untermischverfahren gut bewährt. Wird dieser Härter jedoch den Harnstoff-Formaldehyd-Harzen mit den heute üblichen niedrigen Molverhältnissen von 1:1,2 bis 1:1,35 zugemischt, so ergibt sich eine zu geringe Reaktivität und ein schlechtes Quellverhalten der Spanplatten. Wird der in der EP-B 150 420 beschriebene Härter getrennt vom Leim auf die Späne aufgebracht, so ist wiederum eine Verschlechterung der Festigkeiten und Quellwerte der resultierenden Spanplatten festzustellen.

Der vorliegenden Erfindung lag die Aufgabe zugrunde, mit einer als Formaldehyd-Fänger wirkenden Lösung ein Verfahren der Spanplattenherstellung zu finden, das die aufgezeigten Nachteile der bekannten Verfahren nicht zeigt.

Es wurde nun gefunden, daß dies durch Auftragen einer wäßrigen Lösung mit einem pH-Wert im Bereich von 3,0 bis 6,5, die eine organische Säure und bevorzugt ein Gemisch solcher Säuren als Härter sowie eine formaldehydbindende, stickstoffhaltige Verbindung, insbesondere Harnstoff, enthält, bevorzugt mit möglichst hohem Feststoffgehalt, erreicht werden kann, wenn die wäßrige Lösung vor dem sogenannten Beleimen auf die Späne aufgetragen oder anderweitig mit diesen vermischt wird.

Gegenstand der vorliegenden Erfindung ist somit ein Verfahren zur Herstellung von Holzwerkstoffen mit verminderter nachträglicher Formaldehydabspaltung durch Mischen von lignocellulosehaltigen Teilchen, insbesondere Holzspänen, mit einem härtbaren Bindemittel auf der Grundlage härtbarer Aminoplastkondensate und anschließendem Verpressen der Mischung unter Wärmeeinwirkung, wobei vor dem Mischen der Teilchen mit dem härtbaren Bindemittel eine Mischung A enthaltend ein wasserverträgliches Mittel zur Bindung von Formaldehyd auf die Teilchen aufgetragen bzw. mit ihnen vermischt wird, das dadurch gekennzeichnet ist, daß die Mischung A eine wäßrige Lösung mit einem pH-Wert von 3,0 bis 6,5, insbesondere 4 bis 5,5, bevorzugt 5,0 bis 5,5 darstellt, die

a) als Härter wirkende organische Säuren, bevorzugt ein Gemisch solcher Säuren, die Holz nicht oder nur unwesentlich angreifen, in einer Menge von über 15 Gew.%, bezogen auf den Feststoffgehalt der Lösung, und

b) eine formaldehydbindende, stickstoffhaltige Verbindung, insbesondere Harnstoff enthält,
wobei bevorzugt ein Teil der Säure mit einer flüchtigen und/oder mit Formaldehyd reaktionsfähigen Base, bevorzugt mit Ammoniak neutralisiert bzw. mit einer solchen Base der genannte pH-Wert der Lösung eingestellt ist.

Als Härter wirkende organische Säuren (Komponente a) kommen solche in Frage, die nicht schwächer als Essigsäure ist, insbesondere Gemische organischer Carbonsäuren mit 1 bis 10 C-Atomen, die beim Auftragen oder Abmischen mit den lignocellulosehaltigen Teilchen wenig zur Auskristallisation neigen.

Bevorzugt enthalten sie zu mindestens 50 Gew.% und vorteilhaft überwiegend aliphatische gesättigte Dicarbonsäuren mit 2 bis 10 C-Atomen, insbesondere Adipinsäure, Glutarsäure und Bernsteinsäure. Ein vorteilhaft verwendetes Gemisch organischer Säuren enthält 23 bis 38 Gew.-Teile Bernsteinsäure, 30 bis 55 Gew.-Teile Glutarsäure und 20 bis 35 Gew.-Teilen Adipinsäure neben untergeordneten Mengen an anderen Dicarbonsäuren und insbesondere Monocarbonsäuren. Sehr bewährt haben sich sogenannte Abstreifsäuren wie sie bei der industriellen Produktion von Adipinsäure anfallen. Von diesen waren sehr geeignet z.B. Abstreifsäuren folgender Zusammensetzung: 40 bis 60 Gew.% Wasser, 16 bis 23 Gew.% Adipinsäure, 1 bis 4 Gew.% Glutarsäure, 0,5 bis 2 Gew.% Bernsteinsäure, 15 bis 20 Gew.% Hydroxicapronsäure, 1 bis 2 Gew.% Ameisensäure und bis zu etwa 1 Gew.% weitere Monocarbonsäuren wie Essigsäure, Propionsäure, Buttersäure, Valeriansäure und/oder Capronsäure. Dieses sehr komplexe Säuregemisch besitzt für den beabsichtigte Verwendungszweck den Vorteil, daß es auch in recht hoher Konzentration nicht bei der Spanplattenherstellung auskristallisiert. Die vorstehend genannte Abstreifsäure hat z.B. einen pH-Wert von etwa 1,7, ist also nach Zugabe von der formaldehydbindenden, stickstoffhaltigen Verbindung, insbesondere von Harnstoff, auf einen pH-Wert im oben angegebenen pH-Wertbereich einzustellen, was durch Zusatz einer flüchtigen oder mit Formaldehyd reaktionsfähigen Base, insbesondere von Ammoniak in der erforderlichen Menge erfolgen kann.

Als formaldehydbindende, stickstoffhaltige Verbindung (Komponente b der Lösung) kommt bevorzugt Harnstoff in Frage, der auch zum Teil in Form eines Harnstoff-Aldehyd-Harzes, insbesondere solchem mit hohem Harnstoffgehalt vorliegen kann. Doch kommen auch Amide, Aminsalze, Urethane, Melamin, Polyacrylamid und andere bekannte Formaldehydfänger in Frage, sofern sie sich für die entsprechende Verwendung in Lösung bei den gegebenen pH-Werten derselben eignen.

Vorteilhaft ist es in vielen Fällen, wenn ein Teil der organischen Säuren mit einer flüchtigen und/oder mit Formaldehyd reaktionsfähigen Base, wie insbesondere einem organischen Amin mit 1 bis 10 C-Atomen oder bevorzugt Ammoniak neutralisiert ist. Unter flüchtig wird dabei verstanden, daß die Base bei der Verarbeitungstemperatur der Presse verdampft oder zumindest einen hohen Dampfdruck aufweist. Die Anwesenheit von z.B. Ammoniak in Form der Ammoniumsalze erniedrigt zusätzlich die Abspaltung von Formaldehyd aus der Platte. Vorteilhaft ist es, mit einer solchen Base die Lösung des Säure/Formaldehydfänger-Gemischs auf den geforderten pH-Wert der Lösung von 3 bis 6,5 und bevorzugt 4 bis 5,5 einzustellen, d.h. die Base in der dafür erforderlichen Menge in Gasform oder in Form einer wäßrigen Lösung zuzusetzen.

Geeignete Mischungen A enthalten vorteilhaft auf etwa 20 bis 40 Gew.-Teile Säure (a) etwa 10 bis 35 Gew.-Teile Komponente (b), gerechnet als Harnstoff, der bevorzugt ist, und ggf. bis etwa 10 Gew.-Teile Ammoniak (gerechnet als 100 %iger Ammoniak) oder eine entsprechende Menge einer anderen Base.

Geeignete Mischungen A enthalten wäßrige Lösungen mit Festoffgehalten von 30 bis 70 und insbesondere von 50 bis 65 Gew.%. Es ist vorteilhaft, einen möglichst hohen Feststoffgehalt einzustellen.

Für die Herstellung der Holzwerkstoffe, insbesondere Spanplatten, kommen die bekannten lignocellulosehaltigen Teilchen, bevorzugt Holzspäne wie Fichten- oder Buchenspäne in Frage. Diesbezüglich sei, ebenso wie bezüglich der härtbaren Bindemittel auf der Grundlage härtbaren Aminoplast-Leimharze auf den dem Fachmann bekannten Stand der Technik verwiesen. Aminoplastkondensate wie Formaldehydkondensate des Harnstoffs und/oder Melamins können auch durch Zusatz von kleineren Mengen an Phenol modifiziert sein. Geeignete Kondensate oder Leimharze dieser Art sind als Lösungen oder Pulver im Handel und die Herstellung und Verwendung geeigneter Kondensate ist auch im Stand der Technik beschrieben. Für das erfindungsgemäße Verfahren werden Harnstoff-Formaldehyd-Kondensate und Melamin-Harnstoff-Formaldehyd-Kondensate bevorzugt, die in üblichen Mengen angewandt werden können. Von besonderem Wert ist die Erfindung für formaldehydarme Kondensate, die ein niedriges Molverhältnis von Formaldehyd zu Harnstoff aufweisen, z.B. von 1,2:1 bis 1,4:1.

Die Herstellung der Holzwerkzeuge wie Spanplatten kann in an sich bekannter Weise erfolgen, jedoch werden die erfindungsgemäß verwendeten, als Formaldehydfänger und als Aminoplasthärter wirkenden wäßrigen Lösungen bei der Spanplattenherstellung vor dem Aufbringen oder Zumischen der Aminoplastbildner als Leimharze, d.h. vor dem sogenannten Verleimen auf die bevorzugt trockenen Späne aufgebracht, insbesondere aufgedüst, oder mit ihnen vermischt. Dabei hat sich ein Auftrag der Lösungen in einer Menge von 0,3 bis 3,0, insbesondere 0,5 bis 1,5 Gew.%, bezogen auf das Gewicht der absolut trockenen Teilchen (atro-Gewicht) wie Holzspäne als vorteilhaft gezeigt.

Das Beleimen mit Holzleim, versetzt mit Härter wie Ammoniumchlorid und den weiteren üblichen Zusätzen wie einer Wachsemulsion kann dann in üblicher Art erfolgen, ebenso das anschließende Verpressen zu den Holzwerkstoffen wie Spanplatten. Vorteile der resultierenden Holzwerkstoffe sind aus den nachstehenden Beispielen und Vergleichsversuchen zu ersehen. In ihnen beziehen sich Angaben von Prozenten und Teilen auf das Gewicht, soweit nicht anders angegeben.

3

Beispiel 1 und Vergleichsversuch A

a) Es wurden Gewichtsplatten aus 60 % Fichten- und 40 % Buchenspänen hergestellt (Dicke 18 mm). Die Preßzeit betrug 160 Sek. bei 200°C. Die Platten wurden im Stapel ausgekühlt.

b) Als "Leimharz" diente die wäßrige Lösung eines handelsüblichen Harnstoff-Formaldehyd-Kondensats (Molverhältnis 1:1,22) mit einem Trockengehalt von 66,5 %, einem pH-Wert von ca. 8,4, einer Dichte von ca. 1,293 g/cm$^3$ (20°C) und einer Viskosität von 600 bis 850 mPa•s (20°C).

c) Zum Leimflottenansatz wurde das Leimharz mit einer handelsüblichen Paraffinemulsion mit 50 % Paraffinanteil ("P-Emulsion"), einer 25 %igen wäßrigen Ammoniumchlorid-Lösung ("Härter I") und Wasser versetzt.

d) Die als Härter und Formaldehydfänger wirkende wäßrige Lösung (Mischung A), die vor dem Beleimen der Späne auf diese aufgradiert wurde, wurde hergestellt, indem 687 Teile Abstreifsäure (AS1) der Zusammensetzung:

19 % Adipinsäure,
3 % Glutarsäure,
1 % Bernsteinsäure,
17 % Hydroxicapronsäure, 2 % Ameisensäure,
weniger als 1 % Essig-, Propion- und Buttersäure und
etwa 57 % Wasser,

bei etwa 60 bis 70°C mit 200 Teilen Harnstoff gemischt wurden, wobei der Harnstoff in der heißen Abstreifsäure rasch in Lösung ging. Darauf wurden 113 Teile 25 %iger wäßriger Ammoniak zugemischt. Es resultierte eine wäßrige Lösung mit einem Feststoffgehalt von etwa 57 % mit einem pH-Wert von 5,5, die auch bei 0°C nicht auskristallisiert.

e) Tabelle 1 gibt die Ansatzmengen und Ergebnisse der Plattenprüfung für Beispiel 1 und Vergleichsversuch A wieder und zeigt, daß durch die Spanvorbehandlung mit den erfindungsgemäß verwendeten wäßrigen Lösungen bei gleich kurzer Preßzeit und gleichbleibenden Festigkeiten und Quellwerten die Formaldehyd-Perforatorwerte nach DIN EN 120 auf 6,9 mg gesenkt und damit die Emissionsklasse E1 gemäß den ETB-Richtlinien erreicht werden konnten.

"% Fänger" in der Tabelle bedeutet die Prozentzahl der aufgedüsten als Härter und Formaldehydfänger wirkenden wäßrigen Lösungen, bezogen auf deren Feststoffgehalt und bezogen auf atro Späne (atro = absolut trocken).

Tabelle 1

| Ergebnisse von Beispiel 1 und Vergleichsversuch A ($\bar{\bar{x}}$ : aus 6 Platten mit je 10 Einzelwerten ermittelt) ($\bar{x}$ : Mittelwert aus 2 Bestimmungen) | | |
| --- | --- | --- |
| | Beispiel 1 | Vergleichsversuch A |
| Leimharz (Teile) | 100,0 | 100,0 |
| P-Emulsion (Teile) | 8,0 | 8,0 |
| Härter I (Teile) | 3,0 | 4,0 |
| Wasser (Teile) | 7,7 | 13,4 |
| % Fänger | 1,0 | - |
| Festharzgehalt Ansatz (%) | 56,0 | 53,0 |
| Gelierzeit bei 100° C (s) | 43 | 40 |
| Viskosität im 4 mm DIN-Becher (s) | 44 | 30 |
| Feuchte im Spankuchen (%) | 7,4 | 7,5 |
| Plattenprüfung/geschliffen: | | |
| Dichte (kg/m$^3$) $\bar{\bar{x}}$ | 708 | 713 |
| Biegefestigkeit (N/mm$^2$) $\bar{\bar{x}}$ | 22,8 | 34,7 |
| (N/mm$^2$)s $\bar{x}$ | 1,5 | 2,2 |
| (%) V v $\bar{x}$ | 6,5 | 8,9 |
| Querzugfestigkeit V20 (N/mm$^2$) $\bar{\bar{x}}$ | 0,56 | 0,52 |
| (N/mm$^2$) s $\bar{x}$ | 0,05 | 0,08 |
| (%) v $\bar{x}$ | 9,5 | 15,3 |
| Quellung nach 2 Stunden (%) $\bar{\bar{x}}$ | 4,5 | 5,1 |
| Quellung nach 24 Stunden (%) $\bar{\bar{x}}$ | 20,1 | 22,3 |
| (%) s $\bar{x}$ | 1,19 | 0,87 |
| (%) v $\bar{x}$ | 5,9 | 3,9 |
| Perforatorwert DIN EN 120: | | |
| % Feuchte $\bar{x}$ | 5,2 | 5,4 |
| mg HCHO/100 g atro Platte $\bar{x}$ | 6,9 | 12,2 |

**Ansprüche**

1. Verfahren zur Herstellung von Holzwerkstoffen mit verminderter nachträglicher Formaldehydabspaltung durch Mischen von lignocellulosehaltigen Teilchen, z.B. Holzspänen, mit einem härtbaren Bindemittel auf der Grundlage härtbarer Aminoplastkondensate und anschließendem Verpressen der Mischung unter Wärmeeinwirkung, wobei vor dem Mischen der Teilchen mit dem härtbaren Bindemittel eine Mischung A enthaltend ein wasserverträgliches Mittel zur Bindung von Formaldehyd auf die Teilchen aufgetragen bzw. mit ihnen vermischt wird, dadurch gekennzeichnet, daß die Mischung A eine wäßrige Lösung mit einem pH-Wert von 3,0 bis 6,5 darstellt, die

a) organische Säuren, die Holz nicht oder nur unwesentlich angreifen, in einer Menge von über 15 Gew.%, bezogen auf den Feststoffgehalt der Lösung, und

b) eine formaldehydbindende, stickstoffhaltige Verbindung, insbesondere Harnstoff, enthält.

2. Verfahren nach Anspruch 1, dadurch gekennzeichnet, daß ein Teil der Säuren mit einer flüchtigen und/oder mit Formaldehyd reaktionsfähigen Base neutralisiert ist.

3. Verfahren nach Anspruch 1 oder 2, dadurch gekennzeichnet, daß in der Mischung A ein Teil des Harnstoffs in Form eines Harnstoff-Aldehyd-Harzes vorliegt.

4. Verfahren nach einem der Ansprüche 1 bis 3, dadurch gekennzeichnet, daß die Mischung A eine wäßrige Lösung mit einem pH-Wert von 4 bis 5,5 darstellt.

5

5. Verfahren nach einem der Ansprüche 1 bis 4, dadurch gekennzeichnet, daß die Mischung A als organische Säuren ein beim Auftragen oder Abmischen mit den lignocellulosehaltigen Teilchen wenig zur Auskristallisation neigendes Gemisch aliphatischer organischer Carbonsäuren mit 1 bis 10 C-Atomen enthält.

6. Verfahren nach Anspruch 5, dadurch gekennzeichnet, daß die Carbonsäuren mindestens überwiegend aliphatische gesättigte Dicarbonsäuren mit 2 bis 10 C-Atomen darstellen.

7. Verfahren nach Anspruch 2, dadurch gekennzeichnet, daß die Base ein organisches Amin mit 1 bis 10 C-Atomen oder Ammoniak ist.

8. Verfahren nach einem der Ansprüche 1 bis 7, dadurch gekennzeichnet, daß die Mischung A auf etwa 20 bis 40 Gew.-Teile Säure (a) etwa 10 bis 35 Gew.-Teile Harnstoff enthält und im Falle einer zugesetzten Base deren Menge der zur Einstellung eines pH-Wertes im angegebenen Bereich erforderlichen Menge entspricht.

9. Verfahren nach einem der Ansprüche 1 bis 8, dadurch gekennzeichnet, daß in der Mischung A die wäßrigen Lösungen einen Feststoffgehalt von 30 bis 70 Gew.% aufweisen.

10. Holzwerkstoffe wie Spanplatten, die nach einem Verfahren der Ansprüche 1 bis 9 hergestellt sind.